# EUROPÄISCHE PATENTSCHRIFT

(11) **EP 2 430 325 B1**
(45) Veröffentlichungstag und Bekanntmachung des Hinweises auf die Patenterteilung: **23.01.2013**
(21) Anmeldenummer: 10718982.1
(22) Anmeldetag: 10.05.2010
(51) Int. Cl.: F16C 33/80, F16C 33/78

(54) **DICHTUNGSANORDNUNG FÜR EIN WÄLZLAGER**
SEALING ASSEMBLY FOR A ROLLING BEARING
DISPOSITIF D'ÉTANCHÉITÉ POUR PALIER À ROULEMENT

(30) Priorität: 15.05.2009 DE 102009021470
(43) Veröffentlichungstag der Anmeldung: 21.03.2012
(73) Patentinhaber: Schaeffler Technologies AG & Co. KG, 91074 Herzogenaurach (DE)
(72) Erfinder: FRITZ, Harry, 90530 Wendelstein (DE); GUCKENBERGER, Claus, 91052 Erlangen (DE); HERBST, Stephan, 91052 Erlangen (DE)
(86) Internationale Anmeldenummer: PCT/EP2010/056324
(87) Internationale Veröffentlichungsnummer: WO 2010/130669

(56) Entgegenhaltungen:
- DD-A2- 47 076
- US-A- 5 470 158

## Beschreibung

### Gebiet der Erfindung

Die Erfindung betrifft eine Dichtungsanordnung für ein Wälzlager mit zumindest einem Abdeckelement zur Abdeckung eines Lagerspalts entlang einer Abdeckebene, wobei das Abdeckelement zur Befestigung einen Befestigungsabschnitt und einen Dichtkragen sowie ein den Befestigungsabschnitt und den Dichtkragen verbindendes Grundteil aufweist, und am Dichtkragen zur berührungslosen Abdichtung zumindest eine Dichtfläche vorgesehen ist.

### Hintergrund der Erfindung

Eine derartige Dichtungsanordnung ist aus DD 47 076 bekannt. Dort ist eine einteilig aus Blech hergestellte Deckscheibe zur Abdichtung eines zwischen zwei Lagerringen eines Wälzlagers gebildeten Lagerspalts angeordnet. Die Deckscheibe ist am äußeren Rand an der Schulter des Lageraußenrings verklemmt. An einem radialen Scheibenteil ist radial innen eine rechtwinklig zur Scheibenebene verlaufende Bördelung angebracht. Diese bildet an einem Dichtspalt mit dem inneren Lagerring eine berührungslose Dichtung aus. Von Nachteil ist bei dieser Ausgestaltung, dass die Bördelung sich in Richtung des Lagerinnenraums erstreckt und im Bereich des äußeren Endes des Dichtspalts einen Biegeradius aufweist. Dadurch entsteht zwischen dem Biegeradius der Deckscheibe und der radial gegenüberliegenden Schulter des Lagerinnenrings eine Art Ansaugtrichter, der den Eintritt von Staub, Schmutz und Feuchtigkeit aus der Umgebung in den Dichtspalt begünstigt. Zudem wird die Trichterwirkung durch eine am Rand der Schulter des inneren Lagerrings ausgebildete Bearbeitungsfase verstärkt. Weiterhin kann bei dieser Anordnung am Dichtspalt Lagerfett aus dem Lagerinnenraum nach außen austreten.

### Aufgabe der Erfindung

Der Erfindung liegt daher die Aufgabe zugrunde, eine Dichtungsanordnung der vorgenannten Art zu schaffen, bei der die Dichtwirkung verbessert ist.

### Zusammenfassung der Erfindung

Die Aufgabe wird durch die Merkmale des Anspruchs 1 gelöst. Erfindungsgemäß ist zumindest ein Abdeckelement vorgesehen, das den Lagerspalt entlang einer Abdeckebene abdeckt. Das Abdeckelement weist hierbei eine dem abzudichtenden Lagerinnenraum zugewandte Innenseite und eine von dieser und dem Lagerinnenraum abgewandte Außenseite auf. Der erfindungsgemäß am Abdeckelement zur berührungslosen Abdichtung vorgesehene Dichtkragen erstreckt sich an seinem Endabschnitt von der Innenseite aus in Richtung der Außenseite und bildet eine zur Abdeckebene des Abdeckelements senkrechte oder annähernd senkrechte Dichtfläche, die zusammen mit dem Wälzlager einen Dichtspalt ausbildet. Zugleich weist der Endabschnitt an seinem Ende eine den Eintritt von Verunreinigungen in den Dichtspalt störende Kante auf. Hierdurch wird das Entstehen eines Ansaugtrichters am Dichtspalt vermieden, die Dichtwirkung erhöht und der Eintritt von Verunreinigungen wie Schmutz, Staub und Feuchtigkeit aus der Umgebung in den Dichtspalt reduziert. Da weiterhin der Dichtkragen an seinem Anfangsabschnitt ausgehend von einem Grundteil schräg in Richtung der Innenseite verläuft, kann das aus dem Lagerinnenraum abgeschleuderte Lagerfett an dessen Innenwandung aufgefangen und entlang dieser wieder in den Lagerinnenraum zurückführt werden. Hierdurch entsteht am Dichtkragen ein Lagerfett-Abweiser, der den Austritt von Lagerfett aus dem Lagerinnenraum am Dichtspalt verhindert und das Lager von innen nach außen abdichtet. Auf diese Weise erfüllt der Dichtkragen an einem Dichtspalt eine doppelte Dichtfunktion. Er dichtet das Lager am Lagerinnenraum nach außen und gleichzeitig an dessen äußerem Ende gegenüber der Umgebung nach innen berührungslos ab.

Eine Störkante entsteht am Ende des Endabschnitts auf einfache Weise durch das Aufeinanderstoßen der Dichtfläche des Endabschnitts und dessen äußerer Mantelfläche. Diese kann beispielsweise durch die Materialstärkeseite des Endabschnitts gebildet werden, die als Schnittfläche beim Abtrennen des Materials im Herstellungsprozess entsteht. Die Kante stört den Eintritt des Luft-Staub-, -Schmutz- und/oder -Feuchtigkeits-Gemisches aus der Umgebung in den Dichtspalt. Stoßen die Dichtfläche und die nach außen gerichtete Mantelfläche an der Kante spitzwinklig aufeinander, ist diese besonders scharfkantig ausgebildet und es wird eine große Störwirkung am Dichtspalt erreicht. Vorzugsweise bilden die Dichtfläche und die äußere Mantelfläche an der Kante einen Winkel von 90° oder kleiner. Es ist vorteilhaft, wenn der Endabschnitt an seinem Ende einen in den Dichtspalt hineinragenden Bereich bildet, an dem die Dichtfläche und die äußere Mantelfläche spitz aufeinander zulaufend eine scharfe Kante bilden. Denkbar ist auch, dass der vorgenannte Bereich als eine am Ende des Endabschnitts in den Dichtspalt hineinragende Blende ausgestaltet ist.

Nach einer besonders bevorzugten Ausgestaltung der Erfindung ist der Dichtkragen im Schnitt annähernd U-förmig, mit in Richtung der Innenseite des Abdeckelements weisender U-Basis ausgeführt. Dabei bildet sein Anfangsabschnitt den ersten U-Schenkel und sein Endabschnitt den zweiten U-Schenkel. Der erste U-Schenkel und die U-Basis verlaufen hierbei rechtwinklig oder annähernd rechtwinklig zueinander, während der zweite U-Schenkel durch seinen etwas flacheren, das U leicht öffnenden Verlauf von der strengen U-Form abweicht. Der Mittelabschnitt, der die U-Basis bildet, verbindet Anfangs- und Endabschnitt. Hierbei entstehen zwei Dichtflächen am Dichtkragen, nämlich eine Dichtfläche am zweiten U-Schenkel und eine weitere Dichtfläche an der U-Basis.

Nach einer bevorzugten Ausgestaltung der Erfindung bildet die sich an den ersten U-Schenkel rechtwinklig oder annähernd rechtwinklig anschließende, schräg in Richtung der Außenseite des Abdeckelements verlaufende U-Basis eine in Richtung der Innenseite ausgerichtete, schräg zur Abdeckebene geneigte Dichtfläche. Der zweite an die U-Basis anschließende U-Schenkel verläuft rechtwinklig zur Abdeckebene in Richtung der Außenseite des Abdeck-elements. Dieser weist eine zur Abdeckebene des Abdeckelements senkrechte Dichtfläche auf und bildet zugleich mit der U-Basis einen stumpfen Winkel.

Diese beiden Dichtflächen sind im stumpfen Winkel zueinander angeordnet. Dadurch kann der Dichtkragen in eine entsprechende im Schnitt stumpfwinklige Kontur am Wälzlager, beispielsweise einen Freistich am Umfang einer der Lagerringe des Wälzlagers, eingreifen, wobei seine beiden schräg zueinander ausgerichteten Dichtflächen dieser Kontur berührungslos folgen. Auf diese Weise entsteht zwischen diesen beiden Dichtflächen und der stumpfwinkligen Kontur am Wälzlager eine zweifache Spaltdichtung. Denkbar ist aber auch, dass zwischen einer der Dichtflächen am Dichtkragen und dem Wälzlager eine einfache Spaltdichtung gebildet wird, insbesondere kann zwischen der radialen Dichtfläche am zweiten U-Schenkel und einem an seinem Umfang glatt und ohne Kontur ausgeführten Lagerring ein Dichtspalt gebildet werden.

Nach einer weiteren besonders bevorzugten Ausgestaltung der Erfindung bildet der Mittelabschnitt zusammen mit dem Endabschnitt ein im Schnitt rechtwinkliges Profil aus. Verläuft dabei der Mittelabschnitt zur Abdeckebene des Abdeck-elements parallel, erzeugt dieser eine zur Abdeckebene parallele Dichtfläche.

Vorzugsweise erstreckt sich der Endabschnitt in Richtung der Außenseite des Abdeckelements und ist rechtwinklig zur Abdeckebene angeordnet und bildet dabei eine zur Abdeckebene senkrechte Dichtfläche.

Demzufolge sind die beiden Dichtflächen rechtwinklig zueinander angeordnet. Dadurch kann der Dichtkragen in eine im Schnitt rechtwinklige Kontur am Wälzlager, beispielsweise einen rechtwinkligen Ringabsatz oder eine rechtwinklige Stufe am Umfang einer der Lagerringe, eingreifen, wobei seine beiden rechtwinklig zueinander ausgerichteten Dichtflächen der rechtwinkligen Kontur berührungslos folgen. Auf diese Weise entsteht zwischen diesen beiden Dichtflächen und der rechtwinkligen Kontur am Wälzlager eine zweifache Spaltdichtung.

Denkbar ist auch, dass der Mittelabschnitt zusammen mit dem Endabschnitt ein im Schnitt stumpfwinkliges L-Profil bildet. Dadurch kann der Dichtkragen, beispielsweise in einen stumpfwinkligen Absatz oder in eine stumpfwinklige Stufe am Wälzlager berührungslos eingreifen und eine zweifache Spaltdichtung erzeugen.

Nach einer weiteren besonders bevorzugten Ausgestaltung der Erfindung ist der an den Anfangsabschnitt anschließende Teil des Dichtkragens im Schnitt Z-förmig ausgeführt. Hierbei bildet der Mittelabschnitt des Dichtkragens den ersten und den zweiten Z-Schenkel sowie der Endabschnitt des Dichtkragens den zum ersten Z-Schenkel parallelen dritten Z-Schenkel. Der zweite Z-Schenkel verbindet dabei das der Außenseite des Abdeckelements zugewandte äußere Ende des ersten Z-Schenkels mit dem der Innenseite zugewandten inneren Ende des dritten Z-Schenkels. Der erste Z-Schenkel und der dritte Z-Schenkel verlaufen hierbei rechtwinklig zur Abdeckebene und bilden jeweils eine zu dieser rechtwinklige Dichtfläche. Der zweite Z-Schenkel schließt sich spitzwinklig an das äußere Ende des ersten Z-Schenkel an und erzeugt dabei eine in Richtung der Innenseite ausgerichtete, schräg zur Abdeckebene geneigte Dichtfläche. Hierdurch weist das Z-förmige Profil des Dichtkragens drei Dichtflächen auf. Dadurch kann der Dichtkragen in eine Z-förmige Kontur am Wälzlager eingreifen, beispielsweise einen Ringabsatz oder eine Ringstufe, wobei seine drei Dichtflächen dieser Kontur berührungslos folgen. Auf diese Weise entsteht zwischen diesen Dichtflächen und der Z-förmigen Kontur des Wälzlagers eine dreifache Spaltdichtung, deren Dichtspalte spitzwinklig zueinander angeordnet sind und eine große Labyrinthwirkung erzeugen. Denkbar ist aber auch, eine rechtwinklige oder stumpfwinklige Ausrichtung des zweiten Z-Schenkels zu den beiden andren Z-Schenkeln, und damit eine rechtwinklige oder stumpfwinklig Ausrichtung der Dichtspalte zueinander.

In einer bevorzugten Ausgestaltung der Erfindung ist das Abdeckelement einteilig ausgeführt und einfach herstell- und montierbar. Als Blechteil ausgebildet, kann das Abdeckelement besonders einfach und kostengünstig durch blechverarbeitende Verfahren, insbesondere spanlos durch Tiefziehen, hergestellt werden. Gleichzeitig wird durch die Ausführung in Blech sowohl eine hohe Temperaturbeständigkeit als auch eine hohe Beständigkeit gegenüber chemischen Einflüssen erreicht.

Das Abdeckelement kann am Befestigungsabschnitt lagerseitig mit dem äußeren Lagerring oder mit dem inneren Lagerring verbunden sein und der Dichtkragen an zumindest einer Dichtfläche entsprechend mit dem inneren oder dem äußeren Lagerring zumindest einen Dichtspalt bilden. Vorzugsweise ist das Abdeckelement mit dem äußeren Lagerring verbunden und bildet am Dichtkragen an zumindest einer Dichtfläche mit dem inneren Lagerring zumindest einen Dichtspalt. Da bei einem Radial-Wälzlager der Durchmesser des inneren Lagerrings kleiner ist als der Durchmesser des äußeren Lagerrings, weist der Dichtspalt und die Dichtfläche am Dichtkragen im Vergleich zur alternativen Anordnung eine geringere Umfangslänge auf, wodurch die Gefahr von Undichtigkeiten verringert wird.

Denkbar ist auch, dass die erfindungsgemäße Dichtungsanordnung als eine Welle-Gehäuse-Dichtung ausgeführt ist. Beispielsweise kann ein Gehäuse die Funktion eines äußeren Lagerrings und eine Welle die Funktion eines inneren Lagerrings übernehmen, wobei am Gehäuse und an der Welle Laufbahnen ausgebildet sind, an denen die Wälzkörper geführt werden. Auf diese Weise bilden das Gehäuse und die Welle sowie die zwischen diesen geführten Wälzkörper eine Wälzlagerung, über die das Gehäuse auf der Welle oder die Welle am Gehäuse lagerbar ist. Hierbei kann das Abdeckelement entweder mit dem Gehäuse oder mit der Welle verbunden sein und zur berührungslosen Abdichtung der Dichtkragen mit der Welle oder dem Gehäuse zumindest einen in der oben beschriebenen Weise Dichtspalt bilden.

### Kurze Beschreibung der Zeichnung

Weitere Merkmale der Erfindung ergeben sich aus der nachfolgenden Beschreibung und aus den beiliegenden Zeichnungen, in denen mehrere Ausführungsbeispiele der Erfindung vereinfacht dargestellt sind. Dabei zeigen:
- Figur 1: einen Teilschnitt eines Wälzlagers mit einem ersten Ausführungsbeispiel einer erfindungsgemäßen Dichtungsanordnung,
- Figur 2: einen Teilschnitt des inneren Lagerrings und des Dichtkragens mit einem zweiten Ausführungsbeispiel der Dichtungsanordnung.
- Figur 3: einen Teilschnitt des inneren Lagerrings und des Dichtkragens mit einem dritten Ausführungsbeispiel der Dichtungsanordnung.
- Figur 4: einen Teilschnitt des inneren Lagerrings und des Dichtkragens mit einem vierten Ausführungsbeispiel der Dichtungsanordnung.
- Figur 5: einen Teilschnitt des inneren Lagerrings und des Dichtkragens mit einem fünften Ausführungsbeispiel der Dichtungsanordnung.

### Ausführliche Beschreibung der Zeichnung

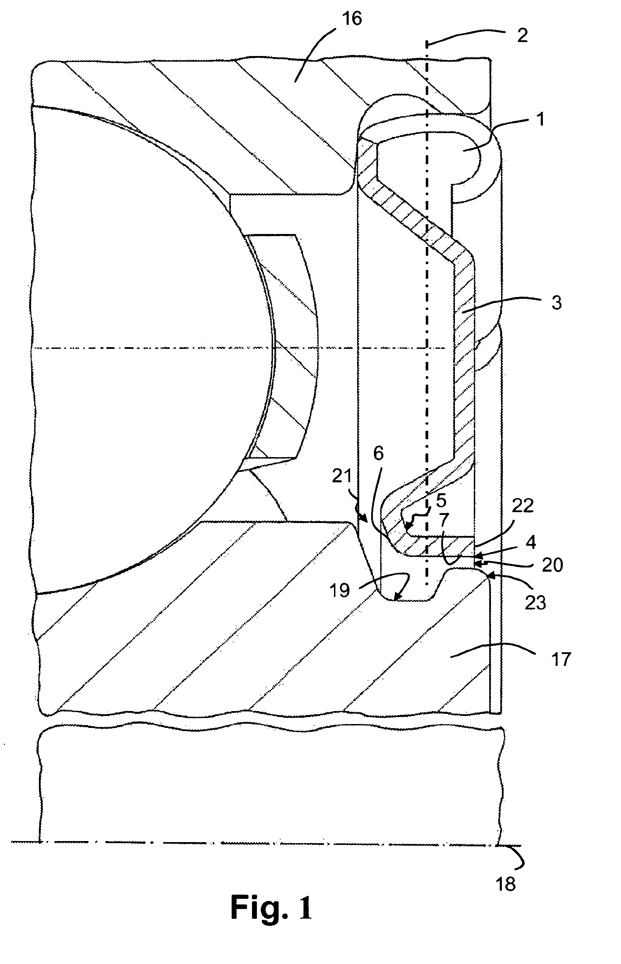

In Figur 1 ist in einem Teilschnitt ein Radial-Rillenkugellager dargestellt. Zwischen einem äußeren Lagerring 16 und einem inneren Lagerring 17 laufen die in einem Wälzkörperkäfig geführten Wälzkörper jeweils an den als Laufrillen ausgeführten Laufbahnen um. Der zwischen den Lagerringen 16, 17 gebildete Lagerspalt ist jeweils an den axialen Außenseiten des Wälzlagers durch ein erfindungsgemäß ringförmig umlaufendes Abdeckelement 1 entlang einer Abdeckebene 2, die senkrecht auf der Wälzlagerachse 18 steht und in radiale Richtung verläuft, abgedeckt. Hierbei weist das Abdeckelement 1 eine dem abzudichtenden Lagerinnenraum axial zugewandte Innenseite und eine von dieser und dem Lagerinnenraum axial abgewandte Außenseite auf. Das Abdeckelement 1 ist als ein einteilig in Blech ausgeführter Deckel ausgebildet. Dieser weist ein sich im montierten Zustand in radiale Richtung erstreckendes scheibenförmiges Grundteil 3 auf, dessen Scheibenebene parallel zur Abdeckebene 2 verläuft. Ausgehend vom Grundteil 3 sind radial außen ein Befestigungsabschnitt und radial innen ein Dichtkragen jeweils ringförmig umlaufend einteilig angeschlossen. Der Befestigungsabschnitt wird durch einen schräg in Richtung des Lagerinnenraums abgewinkelten Schenkel, an den sich ein Befestigungskragen anschließt, gebildet. Der Befestigungskragen ist wulstförmig nach außen gebogen. Dabei greift er zur Befestigung des Abdeckelements 1 kraft- und/oder formschlüssig, beispielsweise eingestemmt oder verspreitzt, in einen komplementär ausgebildeten Freistich am Bord des äußeren Lagerrings 16 ein. Der radial innen am Grundteil 3 angeordnete Dichtkragen dichtet den Lagerspalt berührungslos gegenüber dem inneren Lagerring 17 ab. Der Dichtkragen besteht aus drei sich unmittelbar aneinander anschließenden Abschnitten: einem Anfangs-, einem Mittel- und einem Endabschnitt, die zusammen ein im Schnitt annähernd U-förmiges Profil 5 bilden. Die U-Basis ist dabei dem Lagerinnenraum zugewandt. Der Anfangsabschnitt, der den dem Lagerinnenraum zugewandten ersten U-Schenkel bildet, erstreckt sich radial innen am Grundteil 3 schräg nach innen. Der Mittelabschnitt, der die U-Basis bildet, schließt sich annähernd rechtwinklig an den Anfangsabschnitt an und verläuft schräg nach außen. Der Endabschnitt schließlich, der den dem inneren Lagerinnenring 17 zugewandten zweiten U-Schenkel bildet und sich an den Mittelabschnitt unmittelbar anschließt, verläuft nach axial außen und ist senkrecht zur Abdeckebene 2 und zur Scheibenebene des Grundteils 3 ausgerichtet. Der erste U-Schenkel verläuft hierbei annähernd rechtwinklig zur U-Basis, während der zweite U-Schenkel durch seinen etwas flacheren das U leicht öffnenden Verlauf von der strengen U-Form abweicht. Der Mittelabschnitt verbindet den Anfangs- und den Endabschnitt.

Am Bord des inneren Lagerrings 17 ist ein Freistich 19 ausgebildet. Dessen dem Lagerinnenraum zugewandte innere Seitenwand verläuft ausgehend von der inneren Schulter des Freistichs am Außenumfang des inneren Lagerinnenrings 17 schräg nach außen. In axial äußere Richtung wird der Freistich 19 durch seine äußere Schulter am Randbereich des inneren Lagerrings 17 begrenzt, wobei diese gegenüber der inneren Schulter einen reduzierten Außendurchmesser aufweist. Die Seitenwand und der Außenumfang der äußeren Schulter sind im stumpfen Winkel zueinander angeordnet und bilden eine im Schnitt stumpfwinklige Kontur am inneren Lagerring 17.

Mit seiner U-Basis und seinem zweiten U-Schenkel greift der Dichtkragen in den Freistich 19 berührungslos ein. Dabei verläuft die U-Basis parallel beabstandet zur inneren Seitenwand des Freistichs 18. Der zweite U-Schenkel, der sich unmittelbar an die U-Basis anschließt, verläuft in axiale Richtung nach außen, koaxial und radial beabstandet zum inneren Lagerring 17. Dabei bildet der zweite U-Schenkel an seiner dem inneren Lagerring 17 zugewandten Innenseite eine radial zu diesem ausgerichtete und zur Abdeckebene 2 und der Scheibenebene des Grundteils 3 senkrechte, ringförmig umlaufende Dichtfläche 7 am Dichtkragen. Diese ist koaxial und äquidistant zum Außenumfang der äußeren Schulter des Freistichs angeordnet. Hierdurch entsteht zwischen dem zweiten U-Schenkel und der äußeren Schulter des Freistichs am Randbereich des inneren Lagerrings 17 ein schmaler Dichtspalt 20. Eine schräg zur Abdeckebene 2 und zur Scheibenebene des Grundteils 3 geneigte, zur inneren Seitenwand des Freistichs 19 am inneren Lagerring 17 hin ausgerichtete Dichtfläche 6 ist an der U-Basis an ihrer dieser Seitenwand zugewandten Innenseite parallel beabstandet zu dieser ausgebildet. Dabei verläuft die Dichtfläche 6 äquidistant zur Seitenwand. Dadurch entsteht zwischen der U-Basis und der Seitenwand ein im stumpfen Winkel zum Dichtspalt 20 angeordneter weiterer Dichtspalt 21. Auf diese Weise folgt der Dichtkragen mit seinen Dichtflächen 6, 7 berührungslos der Kontur des Freistichs 19 an dessen innerer Seitenwand und dessen äußerer Schulter und bildet am Freistich 19 mit dem inneren Lagerring 17 eine zweifache Spaltdichtung.

Die äußere Mantelfläche 22 wird am Ende des zweiten U-Schenkels durch seine axial ausgerichtete Materialstärkeseite gebildet, die beispielsweise als Schnittfläche beim Abtrennen des Materials im Herstellungsprozess entsteht. Diese ist mit der Außenmantelfläche des scheibenförmigen Grundteils 3 in einer Ebene liegend angeordnet. Die Materialstärkeseite und die dem inneren Lagerring 17 zugewandte radiale Dichtfläche 7 des zweiten U-Schenkels stoßen an dessen Ende rechtwinklig aufeinander und bilden eine ringförmig umlaufende scharfe Kante 4. Diese ist am äußeren Ende des Dichtspalts 20 an der Dichtfläche 7 des zweiten U-Schenkels dem Bord des inneren Lagerinnenrings 17 radial gegenüberliegend angeordnet und stört den Eintritt des Luft-Staub-, -Schmutz- und/oder -Feuchtigkeits-Gemisches aus der Umgebung in den Dichtspalt 20. Dabei schützt die Kante 4 auch vor weiteren Einflüssen aus der Umgebung, insbesondere kann diese auch Spritzwasser abhalten. Eine am Rand des Bords angebrachte Bearbeitungsfase 23 liegt hierbei außerhalb des Dichtspalts 20. Die radiale Dichtfläche 7 des zweiten U-Schenkels verläuft im Bereich der Kante 4 nach axial außen hin mit konstantem radialem Abstand zum Außenumfang des inneren Lagerrings 17.

Ausgehend vom Grundteil 3 erstreckt sich der den ersten U-Schenkel bildende Anfangsabschnitt des Dichtkragens schräg in Richtung des Lagerinnenraums. Dabei ist dieser annähernd rechtwinklig zur inneren Seitenwand des Freistichs 19 ausgerichtet und läuft auf deren Rand an der inneren Schulter am Außenumfang des inneren Lagerrings 17 zu. Hierbei liegt der erste U-Schenkel an seinem Ende der inneren Schulter des Freistichs 19 schräg gegenüber und bildet mit diesem das dem Lagerinnenraum zugewandte innere Ende des zwischen U-Basis und innerer Seitenwand gebildeten Dichtspalts 21. Das scheibenförmige Grundteil 3 und der an diesem radial außen angeschlossene Schenkel des Befestigungsabschnitts sowie der radial innen abgewinkelte erste U-Schenkel des Dichtkragens begrenzen nach axial außen einen Raum, der als Lagerfett-Reservoir dient. Dabei fungiert der sich schräg in Richtung des Lager-innenraums erstreckende erste U-Schenkel als ein Lagerfett-Abweiser. Dieser fängt an seiner dem Lagerinnenraum zugewandten Innenoberfläche das vom Lager abgeschleuderte Lagerfett auf und führt es schräg nach innen in Richtung des inneren Lagerrings 17 in den Lagerinnenraum zurück. Auf diese Weise kann das Lagerfett am Dichtkragen entlang dem Lagerfett-Abweiser an dem inneren Ende des Dichtspalts 21 vorbei in den Lagerinnenraum zurückgeführt werden und ein Lagerfettaustritt am Dichtspalt 21 sicher verhindert werden.

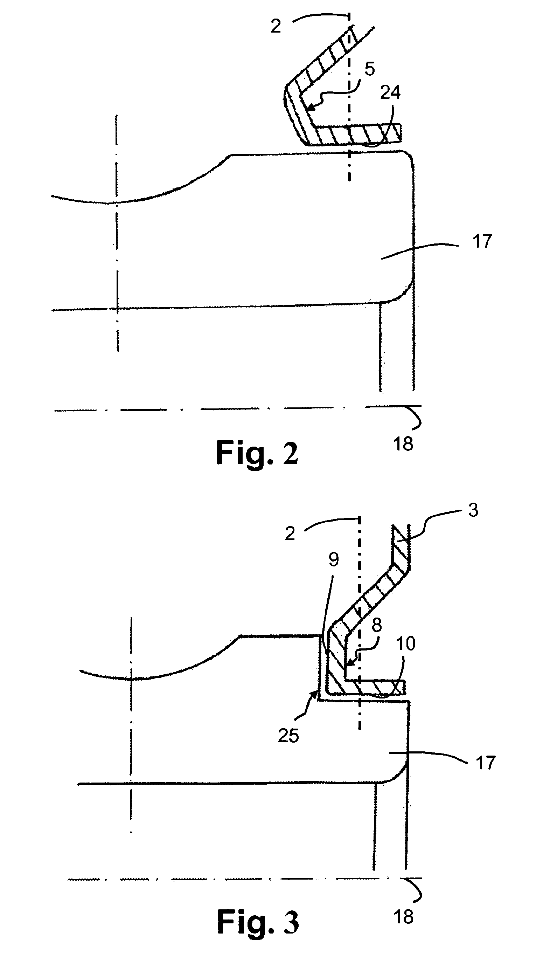

Figuren 2 bis 5 zeigen jeweils schematisch in einem Teilschnitt des inneren Lagerrings 17 und des Dichtkragens ein weiteres Ausführungsbeispiel einer erfindungsgemäßen Dichtungsanordnung. In Figur 2 ist ein zweites Ausführungsbeispiel dargestellt, bei dem der als ein annähernd U-förmiges Profil 5 ausgestaltete Dichtkragen aus Figur 1 mit einem an seinem Bord glatt, ohne einen Freistich, ausgeführten inneren Lagerring 17 eine einfache Spaltdichtung bildet. Hierbei erstreckt sich der Dichtkragen an seinem zweiten U-Schenkel senkrecht zur Abdeckebene 2 und der zu dieser parallelen Scheibenebene des Grundteils 3 koaxial zum inneren Lagerring 17 nach axial außen und bildet an seiner dem inneren Lagerring 17 zugewandten Seite eine radial zu diesem ausgerichtete und äquidistant zu dessen Außenumfang ausgebildete radiale Dichtfläche 24. Zwischen der radialen Dichtfläche 24 und dem an seinem Außenumfang glatt ausgeführten inneren Lagerring 17 entsteht ein langer Dichtspalt, der das Lager sowohl von innen als auch von außen abdichtet.

Figuren 3 bis 5 zeigen weitere Varianten der Erfindung, bei denen der an den Anfangsabschnitt anschließende Teil des Dichtkragens, nämlich Mittelabschnitt und Endabschnitt, an die Kontur eines am Außenumfang des inneren Lagerrings 17 ausgebildeten Ringabsatzes 25, 26, 27 angepasst ist. Der Ringabsatz weist dabei am Außenumfang des inneren Lagerrings 17 eine dem Lagerinnenraum zugewandte innere Schulter und eine sich an diese anschließende Seitenwand auf. An seiner gegenüber seiner inneren Schulter mit reduziertem Außendurchmesser abgesetzten, ausgehend von der Seitenwand koaxial zur Wälzlagerachse 18 verlaufenden äußeren Schulter erstreckt sich der Ringabsatz bis zum äußeren Rand des inneren Lagerrings 17.

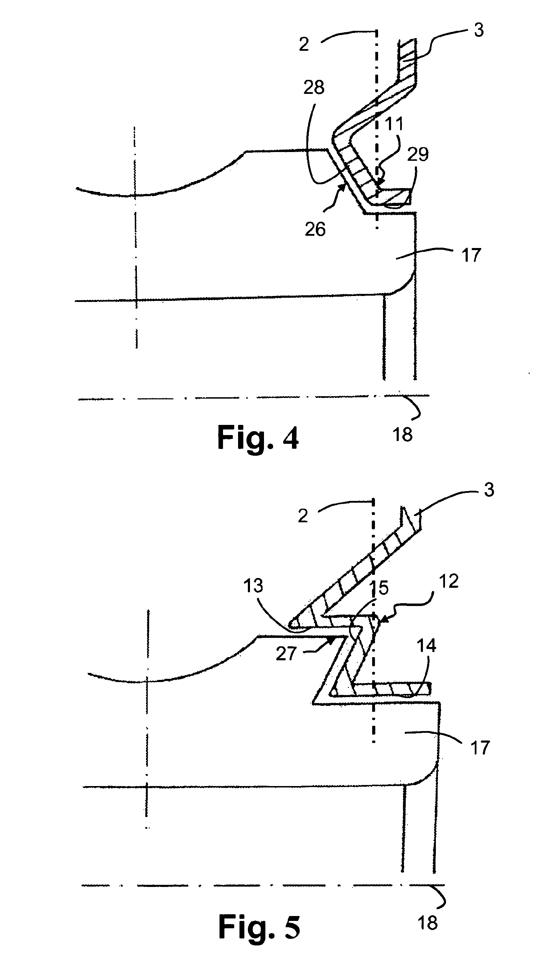

In den Figuren 3 und 4 sind ein drittes und ein viertes Ausführungsbeispiel dargestellt. Der Anfangsabschnitt des Dichtkragens verläuft ausgehend vom Grundteil 3 schräg in Richtung des Lagerinnenraums und ist dabei auf den äußeren Rand der inneren Schulter des Ringabsatzes am Außenumfang des inneren Lagerrings 17 ausgerichtet.

In Figur 3 erstreckt sich der Mittelabschnitt an den Anfangsabschnitt anschließend parallel zur Abdeckebene 2 und zur Scheibenebene des Grundteils 3 in radiale Richtung. Der Endabschnitt schließt sich an den Mittelabschnitt rechtwinklig an. Bei dieser Variante formen der Mittelabschnitt und der Endabschnitt ein im Schnitt rechtwinkliges Profil 8 am Dichtkragen. Dieser greift mit seinem rechtwinkligen Profil 8 in einen rechtwinkligen Ringabsatz 25, bei dem der rechte Winkel von der Seitenwand und der äußeren Schulter gebildet wird, berührungslos ein. Hierbei ist der Mittelabschnitt parallel beabstandet zu der axial ausgerichteten und senkrecht zur Wälzlagerachse 18 verlaufenden Seitenwand des Ringabsatzes 25 angeordnet und bildet am Dichtkragen eine zu dieser Seitenwand äquidistante, axiale Dichtfläche 9, die parallel zur Abdeckebene 2 und der Scheibenebene des Grundteils 3 verläuft. Der koaxial und radial beabstandet zur äußeren Schulter des Ringabsatzes 25 verlaufende Endabschnitt ist zugleich rechtwinklig zur Abdeckebene 2 und zur Scheibenebene des Grundteils 3 angeordnet und weist dabei an seiner der äußeren Schulter des Ringabsatzes 25 zugewandten Innenseite eine radial zu dieser Schulter ausgerichtete Dichtfläche 10 auf. Diese ist koaxial und äquidistant zum Außenumfang der äußeren Schulter des Ringabsatzes 25 angeordnet und verläuft senkrecht zur Abdeckebene 2 und zur Scheibenebene des Grundteils 3. Auf diese Weise folgen die Dichtflächen 9, 10 am rechtwinkligen Profil 8 des Dichtkragens berührungslos der rechtwinkligen Kontur des Ringabsatzes 25. Hierdurch entsteht zwischen Dichtkragen und Ringabsatz 25 eine zweifache Spaltdichtung, deren Dichtspalte rechtwinklig zueinander angeordnet sind.

In Figur 4 schließt sich der Mittelabschnitt annähernd rechtwinklig an den Anfangsabschnitt an. Der Mittelabschnitt und der sich an diesen nach außen anschließende Endabschnitt bilden einen stumpfen Winkel und formen auf diese Weise ein im Schnitt stumpfwinkliges L-förmiges Profil 11 am Dichtkragen aus. Dabei bildet der Mittelabschnitt den längeren und der Endabschnitt den kürzeren L-Schenkel. Mit diesem Profil 11 greift der Dichtkragen in einen stumpfwinkligen Ringabsatz 26 berührungslos ein. Dessen Seitenwand verläuft ausgehend von dessen innerer Schulter schräg zur Wälzlagerachse 18 nach außen und bildet mit dessen äußerer Schulter einen stumpfen Winkel. Der längere L-Schenkel ist dabei parallel beabstandet zu der nach außen geneigten Seitenwand des Ringabsatzes 26 angeordnet, während der kürzere L-Schenkel koaxial und radial beabstandet zur äußeren Schulter des Ringabsatzes 26 am inneren Lagerring 17 verläuft. Hierdurch bildet der längere L-Schenkel eine zu dieser Seitenwand parallele, äquidistante und schräg nach innen dem inneren Lagerring 17 zugewandte Dichtfläche 28, während der kürzere L-Schenkel an seiner der äußeren Schulter des Ringabsatzes 26 zugewandten Innenseite eine radial zu dieser Schulter ausgerichtete und koaxial sowie äquidistant zu dessen Außenumfang angeordnete Dichtfläche 29 aufweist. Diese verläuft senkrecht zur Abdeckebene 2 und zur Scheibenebene des Grundteils 3. Auf diese Weise folgen die Dichtflächen 28, 29 am stumpfwinkligen L-Profil 11 des Dichtkragens der stumpfwinkligen Kontur des Ringabsatzes 26 an dessen Seitenwand und dessen äußerer Schulter. Dadurch entsteht zwischen Dichtkragen und Ringabsatz 26 eine zweifache Spaltdichtung, deren Dichtspalte stumpfwinklig zueinander angeordnet sind.

In dem in Figur 5 gezeigten fünften Ausführungsbeispiel, ist der an den Anfangsabschnitt anschließende Teil des Dichtkragens im Schnitt Z-förmig ausgeführt. Hierbei formen der Mittelabschnitt und der Endabschnitt ein im Schnitt Z-förmiges Profil 12 am Dichtkragen aus. Der Mittelabschnitt des Dichtkragens bildet den ersten Z-Schenkel und den zweiten Z-Schenkel, wobei sich der erste Z-Schenkel unmittelbar an den Anfangsabschnitt anschließt, während der Endabschnitt des Dichtkragens den zum parallelen dritten Z-Schenkel bildet. Dabei schließt sich der zweite Z-Schenkel an den ersten Z-Schenkel spitzwinklig an, verläuft schräg nach innen und verbindet das äußere Ende des ersten Z-Schenkels mit dem dem Lagerinnenraum zugewandten inneren Ende des dritten Z-Schenkels. Am Bord des inneren Lagerrings 17 ist ein Ringabsatz 27 angebracht, dessen Seitenwand ausgehend von dessen innerer Schulter schräg zur Wälzlagerachse 18 nach innen verläuft und jeweils einen spitzen Winkel mit dessen äußerer und innerer Schulter bildet. Mit seinem Z-förmigen Profil 12 folgt der Dichtkragen der am Ringabsatz 27 durch dessen Schultern und Seitenwand gebildeten im Schnitt Z-förmigen Kontur. Hierbei erstrecken sich der erste Z-Schenkel koaxial zur inneren Schulter und der dritte Z-Schenkel koaxial zur äußeren Schulter des Ringabsatzes 27. Der erste und der dritte Z-Schenkel bilden dabei an ihren der inneren bzw. der äußeren Schulter des Ringabsatzes 27 zugewandten Innenseiten am Dichtkragen jeweils eine radial zu diesen Schultern ausgerichtete Dichtfläche 13, 14. Diese Dichtflächen 13, 14 sind jeweils koaxial und äquidistant zum Außenumfang der inneren bzw. der äußeren Schulter des Ringabsatzes 27 und senkrecht zur Abdeckebene 2 und zur Scheibenebene des Grundteils 3 angeordnet. Der zweite Z-Schenkel erstreckt sich dabei parallel beabstandet zur Seitenwand des Ringabsatzes 27 und bildet am Dichtkragen eine zu dieser Seitenwand äquidistante, in Richtung des Lagerinnenraums ausgerichtete, schräg zur Abdeckebene 2 und der Scheibenebene des Grundteils 3 geneigte Dichtfläche 15. Hierdurch weist der Dichtkragen an seinem Z-förmigen Profil drei Dichtflächen 13, 14, 15 auf. Diese folgen der Z-förmigen Kontur des Ringabsatzes 27 berührungslos, wodurch zwischen Dichtkragen und Ringabsatz 27 eine dreifache Spaltdichtung entsteht, deren Dichtspalte sich jeweils spitzwinklig aneinander anschließen.

### Bezugszeichenliste

- 1: Abdeckelement
- 2: Abdeckebene
- 3: Grundteil
- 4: Kante
- 5: Profil
- 6: Dichtfläche
- 7: Dichtfläche
- 8: Profil
- 9: Dichtfläche
- 10: Dichtfläche
- 11: Profil
- 12: Profil
- 13: Dichtfläche
- 14: Dichtfläche
- 15: Dichtfläche
- 16: Lagerring
- 17: Lagerring
- 18: Wälzlagerachse
- 19: Freistich
- 20: Dichtspalt
- 21: Dichtspalt
- 22: Mantelfläche
- 23: Bearbeitungsfase
- 24: Dichtfläche
- 25: Ringabsatz
- 26: Ringabsatz
- 27: Ringabsatz
- 28: Dichtfläche
- 29: Dichtfläche

## Patentansprüche

1. Dichtungsanordnung für ein Wälzlager mit zumindest einem Abdeckelement (1) zur Abdeckung eines Lagerspalts entlang einer Abdeckebene (2), wobei das Abdeckelement (1) zur Befestigung einen Befestigungsabschnitt und einen Dichtkragen sowie ein den Befestigungsabschnitt und den Dichtkragen verbindendes Grundteil (3) aufweist, und am Dichtkragen zur berührungslosen Abdichtung zumindest eine Dichtfläche (6, 7, 9, 10) vorgesehen ist, **dadurch gekennzeichnet, dass** ausgehend von dem Grundteil (3) der Dichtkragen an seinem Anfangsabschnitt schräg in Richtung der dem Lagerinnenraum zugewandten Innenseite des Abdeckelements (1) verläuft und sich an seinem Endabschnitt von der Innenseite aus in Richtung der dem Lagerinnenraum abgewandten Außenseite des Abdeckelements (1) erstreckt und eine zu der Abdeckebene (2) im Wesentlichen senkrechte Dichtfläche (7, 10) sowie am Ende des Endabschnitts zumindest eine den Eintritt von Verunreinigungen in den Lagerinnenraum störende Kante (4) bildet.

2. Dichtungsanordnung nach Anspruch 1, **dadurch gekennzeichnet, dass** der Dichtkragen ein im Schnitt annähernd U-förmiges Profil (5) aufweist, wobei sein Anfangsabschnitt den ersten U-Schenkel und sein Endabschnitt den zweiten U-Schenkel bildet sowie ein Mittelabschnitt zwischen Anfangsabschnitt und Endabschnitt vorgesehen ist, welcher die U-Basis bildet, die in Richtung der Innenseite des Abdeckelements (1) weist.

3. Dichtungsanordnung nach Anspruch 1 oder 2, **dadurch gekennzeichnet, dass** die U-Basis sich rechtwinklig oder annähernd rechtwinklig an den ersten U-Schenkel anschließt und eine in Richtung der Innenseite des Abdeckelements (1) weisende, schräg zur Abdeckebene (2) geneigte Dichtfläche (6) bildet.

4. Dichtungsanordnung nach einem der Ansprüche 1 bis 3, **dadurch gekennzeichnet, dass** sich der zweite U-Schenkel rechtwinklig zur Abdeckebene (2) in Richtung der Außenseite des Abdeckelements (1) erstreckt und eine zur Abdeckebene (2) senkrechte Dichtfläche (7) bildet.

5. Dichtungsanordnung nach einem der Ansprüche 1 bis 4, **dadurch gekennzeichnet, dass** der Dichtkragen einen an seinen Anfangsabschnitt anschließenden und diesen mit seinem Endabschnitt verbindenden Mittelabschnitt aufweist und der Mittelabschnitt zusammen mit dem Endabschnitt ein im Schnitt rechtwinkliges Profil (8) bildet.

6. Dichtungsanordnung nach einem der Ansprüche 1 bis 5, **dadurch gekennzeichnet, dass** der Dichtkragen an seinem Mittelabschnitt zwischen Anfangsabschnitt und Endabschnitt zur Abdeckebene (2) parallel verläuft und der Mittelabschnitt eine zur Abdeckebene (2) parallele Dichtfläche (9) bildet.

7. Dichtungsanordnung nach einem der Ansprüche 1 bis 6, **dadurch gekennzeichnet, dass** der Endabschnitt sich rechtwinklig zum Mittelabschnitt in Richtung der Außenseite des Abdeckelements (1) erstreckt und eine zur Abdeckebene (2) senkrechte Dichtfläche (10) bildet.

8. Dichtungsanordnung nach einem der Ansprüche 1 bis 7, **dadurch gekennzeichnet, dass** der Mittelabschnitt zusammen mit dem Endabschnitt ein im Schnitt stumpfwinkliges L-Profil (11) bildet.

9. Dichtungsanordnung nach einem der Ansprüche 1 bis 8, **dadurch gekennzeichnet, dass** der an den Anfangsabschnitt anschließende Teil des Dichtkragens ein im Schnitt Z-förmiges Profil (12) bildet, wobei der Mittelabschnitt des Dichtkragens den ersten Z-Schenkel und den zweiten Z-Schenkel sowie der Endabschnitt des Dichtkragens den zum ersten Z-Schenkel parallelen dritten Z-Schenkel bildet, wobei der zweite Z-Schenkel das äußere Ende des ersten Z-Schenkels mit dem inneren Ende des dritten Z-Schenkels verbindet.

10. Dichtungsanordnung nach einem der Ansprüche 1 bis 9, **dadurch gekennzeichnet, dass** der erste Z-Schenkel und der dritte Z-Schenkel jeweils rechtwinklig zur Abdeckebene (2) verlaufen und jeweils eine zur Abdeckebene (2) senkrechte Dichtfläche (13, 14) bilden.

11. Dichtungsanordnung nach einem der Ansprüche 1 bis 10, **dadurch gekennzeichnet, dass** der zweite Z-Schenkel sich spitzwinklig an den ersten Z-Schenkel anschließt und eine in Richtung der Innenseite des Abdeck-elements (1) ausgerichtete, schräg zur Abdeckebene (2) geneigte Dichtfläche (15) bildet.

12. Dichtungsanordnung nach einem der Ansprüche 1 bis 11, **dadurch gekennzeichnet, dass** das Abdeckelement (1) einteilig ausgeführt ist.

13. Dichtungsanordnung nach einem der Ansprüche 1 bis 12, **dadurch gekennzeichnet, dass** das Abdeckelement (1) als Blechteil ausgeführt ist.

14. Dichtungsanordnung nach einem der Ansprüche 1 bis 13, **dadurch gekennzeichnet, dass** das Abdeckelement (1) an seinem Befestigungsabschnitt mit dem äußeren Lagerring (16) des Wälzlagers verbunden ist und der Dichtkragen zur berührungslosen Abdichtung gegenüber dem inneren Lagerring (17) des Wälzlagers zumindest eine Dichtfläche (6, 7, 9, 10) aufweist.

## Claims

1. Seal arrangement for a rolling bearing, having at least one covering element (1) for covering a bearing gap along a covering plane (2), wherein the covering element (1) has, for fastening, a fastening portion and a sealing collar and also a base part (3) that connects the fastening portion and the sealing collar, and at least one sealing surface (6, 7, 9, 10) is provided on the sealing collar for contactless sealing, **characterized in that**, proceeding from the base part (3), in its starting portion the sealing collar runs obliquely in the direction of the inner side, which faces towards the bearing interior, of the covering element (1), and in its end portion said sealing collar extends from the inner side in the direction of the outer side, which faces away from the bearing interior, of the covering element (1) and forms a sealing surface (7, 10) substantially perpendicular to the covering plane (2) and, at the end of the end portion, forms at least one edge (4) which disrupts the ingress of contaminants into the bearing interior.

2. Seal arrangement according to Claim 1, **characterized in that** the sealing collar has a profile (5) which is approximately U-shaped in cross section, wherein the starting portion of said sealing collar forms the first U limb and the end portion of said sealing collar forms the second U limb, and a middle portion is provided between the starting portion and the end portion, which middle portion forms the U base which points in the direction of the inner side of the covering element (1).

3. Seal arrangement according to Claim 1 or 2, **characterized in that** the U base adjoins the first U limb at right angles or approximately at right angles and forms a sealing surface (6) which points in the direction of the inner side of the covering element (1) and which is inclined obliquely with respect to the covering plane (2).

4. Seal arrangement according to one of Claims 1 to 3, **characterized in that** the second U limb extends at right angles to the covering plane (2) in the direction of the outer side of the covering element (1) and forms a sealing surface (7) which is perpendicular to the covering plane (2).

5. Seal arrangement according to one of Claims 1 to 4, **characterized in that** the sealing collar has a middle portion which adjoins the starting portion of said sealing collar and which connects said starting portion to the end portion of said sealing collar, and the middle portion forms, together with the end portion, a profile (8) which is right-angled in cross section.

6. Seal arrangement according to one of Claims 1 to 5, **characterized in that** the sealing collar, in its middle portion between the starting portion and the end portion, runs parallel to the covering plane (2), and the middle portion forms a sealing surface (9) which is parallel to the covering plane (2).

7. Seal arrangement according to one of Claims 1 to 6, **characterized in that** the end portion extends at right angles to the middle portion in the direction of the outer side of the covering element (1) and forms a sealing surface (10) which is perpendicular to the covering plane (2).

8. Seal arrangement according to one of Claims 1 to 7, **characterized in that** the middle portion forms, together with the end portion, an L profile (11) which has an obtuse angle in cross section.

9. Seal arrangement according to one of Claims 1 to 8, **characterized in that** that part of the sealing collar which adjoins the starting portion forms a profile (12) which is Z-shaped in cross section, wherein the middle portion of the sealing collar forms the first Z limb and the second Z limb, and the end portion of the sealing collar forms the third Z limb which is parallel to the first Z limb, wherein the second Z limb connects the outer end of the first Z limb to the inner end of the third Z limb.

10. Seal arrangement according to one of Claims 1 to 9, **characterized in that** the first Z limb and the third Z limb run in each case at right angles to the covering plane (2) and form in each case one sealing surface (13, 14) which is perpendicular to the covering plane (2).

11. Seal arrangement according to one of Claims 1 to 10, **characterized in that** the second Z limb adjoins the first Z limb at an acute angle and forms a sealing surface (15) which is aligned in the direction of the inner side of the covering element (1) and which is inclined obliquely with respect to the covering plane (2).

12. Seal arrangement according to one of Claims 1 to 11, **characterized in that** the covering element (1) is formed in one piece.

13. Seal arrangement according to one of Claims 1 to 12, **characterized in that** the covering element (1) is formed as a sheet-metal part.

14. Seal arrangement according to one of Claims 1 to 13, **characterized in that** the covering element (1) is connected, in its fastening portion, to the outer bearing ring (16) of the rolling bearing, and the sealing collar has at least one sealing surface (6, 7, 9, 10) for contactless sealing with respect to the inner bearing ring (17) of the rolling bearing.

## Revendications

1. Agencement d'étanchéité pour un palier à roulement comprenant au moins un élément de recouvrement (1) pour recouvrir une fente de palier le long d'un plan de recouvrement (2), l'élément de recouvrement (1) présentant, pour la fixation, une portion de fixation et un bord d'étanchéité ainsi qu'une partie de base (3) reliant la portion de fixation et le bord d'étanchéité, et au moins une surface d'étanchéité (6, 7, 9, 10) étant prévue sur le bord d'étanchéité pour l'étanchéité sans contact, **caractérisé en ce que,** partant de la partie de base (3), le bord d'étanchéité s'étend au niveau de sa portion initiale obliquement dans la direction du côté intérieur de l'élément de recouvrement (1) tourné vers l'espace interne du palier, et s'étend au niveau de sa portion d'extrémité depuis le côté intérieur dans la direction du côté extérieur de l'élément de recouvrement (1) opposé à l'espace interne du palier et forme une surface d'étanchéité (7, 10) sensiblement perpendiculaire au plan de recouvrement (2) ainsi qu'au moins une arête (4) à l'extrémité de la portion d'extrémité, empêchant l'entrée d'impuretés dans l'espace interne du palier.

2. Agencement d'étanchéité selon la revendication 1, **caractérisé en ce que** le rebord d'étanchéité présente un profil (5) approximativement en forme de U en coupe, sa portion initiale formant la première branche du U et sa portion d'extrémité formant la deuxième branche du U, et une portion centrale étant prévue entre la portion initiale et la portion d'extrémité, laquelle forme la base du U, qui est tournée dans la direction du côté intérieur de l'élément de recouvrement (1).

3. Agencement d'étanchéité selon la revendication 1 ou 2, **caractérisé en ce que** la base du U se raccorde à angle droit ou approximativement à angle droit à la première branche du U et forme une surface d'étanchéité (6) tournée dans la direction du côté intérieur de l'élément de recouvrement (1) et inclinée obliquement par rapport au plan de recouvrement (2).

4. Agencement d'étanchéité selon l'une quelconque des revendications 1 à 3, **caractérisé en ce que** la deuxième branche du U s'étend à angle droit par rapport au plan de recouvrement (2) dans la direction du côté extérieur de l'élément de recouvrement (1) et forme une surface d'étanchéité (7) perpendiculaire au plan de recouvrement (2).

5. Agencement d'étanchéité selon l'une quelconque des revendications 1 à 4, **caractérisé en ce que** le bord d'étanchéité présente une portion centrale se raccordant à sa portion initiale et la reliant à sa portion d'extrémité, et la portion centrale forme conjointement avec la portion d'extrémité un profil (8) à angle droit en coupe.

6. Agencement d'étanchéité selon l'une quelconque des revendications 1 à 5, **caractérisé en ce que** le bord d'étanchéité s'étend parallèlement au plan de recouvrement (2) au niveau de sa portion centrale entre la portion initiale et la portion d'extrémité, et la portion centrale forme une surface d'étanchéité (9) parallèle au plan de recouvrement (2).

7. Agencement d'étanchéité selon l'une quelconque des revendications 1 à 6, **caractérisé en ce que** la portion d'extrémité s'étend à angle droit par rapport à la portion centrale dans la direction du côté extérieur de l'élément de recouvrement (1) et forme une surface d'étanchéité (10) perpendiculaire au plan de recouvrement (2).

8. Agencement d'étanchéité selon l'une quelconque des revendications 1 à 7, **caractérisé en ce que** la portion centrale forme conjointement avec la portion d'extrémité un profil en L (11) à angle obtus en coupe.

9. Agencement d'étanchéité selon l'une quelconque des revendications 1 à 8, **caractérisé en ce que** la partie du bord d'étanchéité se raccordant à la portion initiale forme un profil (12) en forme de Z en coupe, la portion centrale du bord d'étanchéité formant la première branche du Z et la deuxième branche du Z, et la portion d'extrémité du bord d'étanchéité formant la troisième branche du Z parallèle à la première branche du Z, la deuxième branche du Z reliant l'extrémité extérieure de la première branche du Z à l'extrémité intérieure de la troisième branche du Z.

10. Agencement d'étanchéité selon l'une quelconque des revendications 1 à 9, **caractérisé en ce que** la première branche du Z et la troisième branche du Z s'étendent à chaque fois à angle droit par rapport au plan de recouvrement (2) et forment à chaque fois une surface d'étanchéité (13, 14) perpendiculaire au plan de recouvrement (2).

11. Agencement d'étanchéité selon l'une quelconque des revendications 1 à 10, **caractérisé en ce que** la deuxième branche du Z se raccorde à angle aigu à la première branche du Z et forme une surface d'étanchéité (15) orientée dans la direction du côté intérieur de l'élément de recouvrement (1), inclinée obliquement par rapport au plan de recouvrement (2).

12. Agencement d'étanchéité selon l'une quelconque des revendications 1 à 11, **caractérisé en ce que** l'élément de recouvrement (1) est réalisé d'une seule pièce.

13. Agencement d'étanchéité selon l'une quelconque des revendications 1 à 12, **caractérisé en ce que** l'élément de recouvrement (1) est réalisé sous forme de pièce en tôle.

14. Agencement d'étanchéité selon l'une quelconque des revendications 1 à 13, **caractérisé en ce que** l'élément de recouvrement (1) est connecté au niveau de sa portion de fixation à la bague de palier extérieure (16) du palier à roulement et le bord d'étanchéité présente, pour l'étanchéité sans contact par rapport à la bague de palier intérieure (17) du palier à roulement, au moins une surface d'étanchéité (6, 7, 9, 10).
